# EUROPEAN PATENT SPECIFICATION

(11) **EP 4 202 162 B1**
(45) Date of publication and mention of the grant of the patent: **20.05.2026**
(21) Application number: 21217742.2
(22) Date of filing: 24.12.2021
(51) Int. Cl.: E05B 85/10, E05B 85/18, E05B 77/06, E05B 79/06, E05B 79/20

(54) **VEHICLE REAR DOOR HANDLE**
TÜRGRIFF FÜR EINE HINTERTÜR
POIGNÉE DE PORTE ARRIÈRE

(43) Date of publication of application: 28.06.2023
(73) Proprietor: MINEBEA ACCESSSOLUTIONS ITALIA S.P.A., 10044 Pianezza (IT)
(72) Inventor: GUERIN, Anthony, 10044 PIANEZZA TO (IT); Pieri, Alexandre, 10044 PIANEZZA TO (IT); Sharma, Sachin, 10044 PIANEZZA TO (IT)
(74) Representative: Innovincia

(56) References cited:
- US-A1- 2019 301 213
- US-A1- 2020 190 865

## Description

The invention relates to the field of vehicle door handles to control the opening of vehicle doors. The invention also relates to vehicle doors and vehicles comprising such vehicle door handles.

In the vehicle rear door handles of the state of the art, handles are known that comprise a handle lever movable with respect to a handle frame between a rest position and an opening position in rotation around a handle lever axis. When the handle lever moves to its opening position, the handle lever usually activates a kinematic system in order to unlatch the door.

Such vehicle door handles are known from US 2020/190865 A1 or US 2019/301213 A1.

In the vehicle rear doors where the handle mechanism is attached to an internal side of a vehicle door panel with the handle lever that is not, or hardly, visible from the outside, also called rear hidden handle, the position of the elements of the kinematic system is problematic due to the lack of space. In particular, the kinematic lever of the kinematic system, which is in direct cooperation with the handle lever and allows the transmission of the rotation movement of the handle lever to a Bowden cable in order to unlatch the door, is a voluminous element. In the prior art, the kinematic lever has been placed either directly behind or below the handle lever. However, those positions present some drawbacks. Indeed, when the kinematic lever is placed behind the handle lever, the depth of the handle is increased which reduces therefore its compactness. In the same way, when the kinematic lever is placed below the handle lever, a housing has to be created in the door panel in order to allow the attachment of said kinematic lever because there is no space provided at first and capable of receiving the kinematic lever.

The purpose of the invention is therefore to provide a vehicle rear door handle, more particularly a vehicle rear door hidden handle, which is more compact.

To that end, the invention is directed to a vehicle rear door handle, comprising:
- a handle frame to be attached on an internal side of a vehicle rear door panel, the handle frame having an elongated bowl,
- a handle lever which is pivotably received in the elongated bowl and supported by the handle frame, the handle lever being movable in rotation around a handle lever axis with respect to the handle frame between a rest position and an opening position,
- a kinematic lever coupled to the handle lever and rotatively mobile with respect to the handle frame around a kinematic lever axis between a rest position and an active position, wherein the kinematic lever has an attachment section for a Bowden cable and is configured to interact via the Bowden cable with a latch mechanism to unlatch the door when it reaches the active position, the vehicle rear door handle being configured so that when the handle lever reaches its opening position, the kinematic lever reaches its active position,
characterized in that the kinematic lever axis of the kinematic lever is disposed between a free end of the handle frame and the elongated bowl and the attachment section for the Bowden cable is protruding such that the Bowden cable can be fixed beside the elongated bowl.

Thanks to the position of the kinematic lever between the free end of the handle frame and the elongated bowl, i.e., above the handle lever when the handle frame is mounted on a vehicle door panel, the vehicle rear door handle can be designed more compact. Indeed, in this configuration, the kinematic lever occupies a position which is otherwise let free and consequently lost. Thus, space utilization is optimized, in particular with rear door having a V-shaped rear edge. In addition, owing to the fact that the attachment section for the Bowden cable of the kinematic lever is protruding such that the Bowden cable can be fixed beside, i.e., not behind but axially offset, the elongated bowl, the rear door handle can further be designed more compact with, in particular, a reduced depth.

The vehicle rear door handle may further present one or more of the following characteristics, taken separately or in combination.

The handle lever at one end comprises a control cam and the kinematic lever comprises a radial arm cooperating with the control cam of the handle lever.

The kinematic lever is disposed on a rear face of the handle frame and the elongated bowl presents at the end facing the kinematic lever a through-opening to cooperate with the control cam.

The control cam has a general shape of a part of a torus.

The kinematic lever axis is orthogonal to the handle lever axis.

The kinematic lever presents an abutment and the vehicle rear door handle comprises at least one reversible inertial security system mounted on the handle frame, said reversible inertial security system comprising a rocker arm which carries an inertial mass, the rocker arm being pivotally mounted between a rest position allowing the kinematic lever to rotate between the rest position and the active position and a blocking position it reaches in case of a collision where the rocker arm cooperates with said abutment in order to block rotation of the kinematic lever in the rest position thus preventing an unlatch of the door.

The reversible inertial security system comprises a safety spring dimensioned to put the rocker arm in the rest position in case of no collision and to be overdriven by the force exerted by the inertial mass in case of a collision in order to put the rocker arm in the blocking position.

The reversible inertial security system is mounted between the free end of the handle frame and the kinematic lever.

The radial arm of the kinematic lever and the abutment of the kinematic lever are angularly offset of less than 150°, in particular less than 120°.

The abutment is formed by a sector shaped blocking tooth.

The rocker arm extends radially with respect to the kinematic lever axis.

The invention is also directed to a vehicle rear door handle comprising a vehicle rear door handle as described above.

In a preferred embodiment, the vehicle rear door comprises a vehicle rear door panel having a V-shaped rear edge, the vehicle rear door handle being attached to an internal side of the vehicle rear door panel at the rear edge of the vehicle rear door panel.

Preferably, the vehicle rear door panel comprises on its internal side a recess adjacent to the vehicle rear door handle, the recess defining an access to the handle lever of the vehicle rear door handle when the vehicle rear door is closed.

The invention is also directed to a vehicle comprising a vehicle rear door handle as described above.

### Brief description of the figure

The invention will be better understood and other characteristics and advantages will appear at the reading of the following description, given in an illustrative and not limiting fashion, referring to the annexed figures in which:
- Figure 1 is a schematic top view of a vehicle comprising two rear door handles according to an embodiment of the invention;
- Figure 2 is a perspective view of the vehicle rear door handle mounted on a rear door panel of the vehicle of Figure 1;
- Figure 3 is an exploded view of the vehicle rear door handle of Figure 2;
- Figure 4 is a side view of the vehicle rear door handle of Figure 2 in the rest position;
- Figure 5 is a view similar to Figure 4 wherein the vehicle rear door handle is in the opening position;
- Figure 6 is a perspective view of a rocker arm and a kinematic lever of the vehicle rear door handle of Figure 2, wherein the rocker arm is in a rest position; and
- Figure 7 is a view similar to Figure 6 wherein the rocker arm is in a blocking position;

### Detailed description

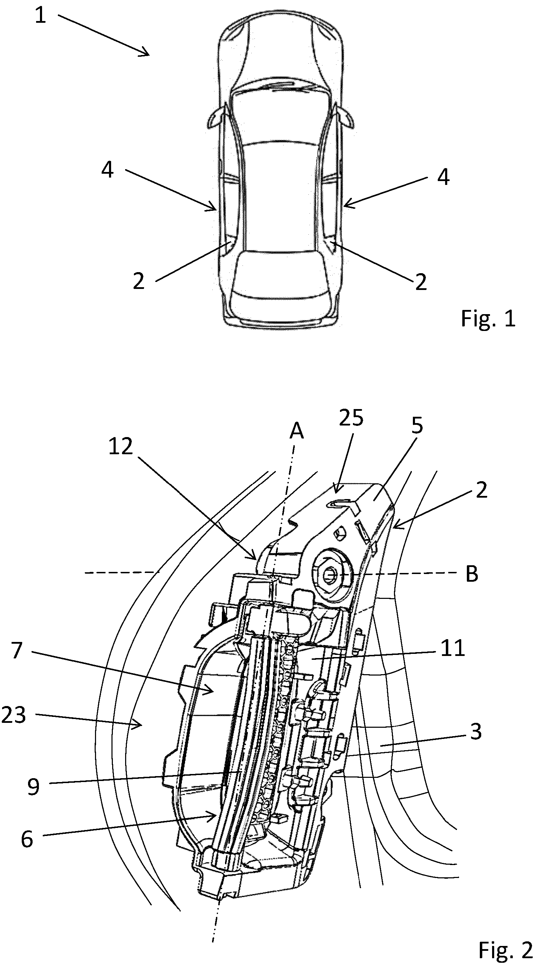

Figure 1 shows a vehicle 1 comprising two rear door handles 2, each rear door handle 2 being mounted on a respective rear door panel 3 of one of the two rear doors 4 of the vehicle 1.

The rear door handle 2 comprises, in particular, a handle frame 5, a handle lever 6, a kinematic system and an inertial security system.

### The handle frame and handle lever

The handle frame 5 has an elongated shape and comprises an elongated bowl 7. The elongated bowl 7 forms a cavity which extends from one end of the handle frame 5, corresponding to a bottom end of the handle frame 5 when the vehicle rear door handle 2 is mounted on the rear door 4, to about the two-thirds of the length of the handle frame 5 (figures 2-5). At its end opposite to its end located at the bottom end of the handle frame 5, the elongated bowl 7 presents a through-opening 8. The end of the handle frame 5 opposite to its end comprising the elongated bowl is a free end 25.

The handle frame 5 is attached on an internal side of the vehicle rear door panel 3 (figure 2). The internal side corresponds to the side of the rear door panel 3 facing the interior of the vehicle 1 when the rear door 4 comprising said rear door panel 3 is closed. Thus, the handle frame 5 presents a rear face facing the internal side of the rear door panel 3 and a front face facing the interior of the vehicle 1 when the rear door 4 on which the handle frame 5 is attached is closed.

Each rear door panel 3 has a V-shaped rear edge (figure 2). The vehicle rear door handle 2 is attached to the internal side of the vehicle door panel 3 at the rear edge of the vehicle door panel 3. This configuration allows a better integration of the vehicle rear door handle 2 on the rear door panel 3 and a better optimization of the space used in comparison with a rear door panel having a linear rear edge.

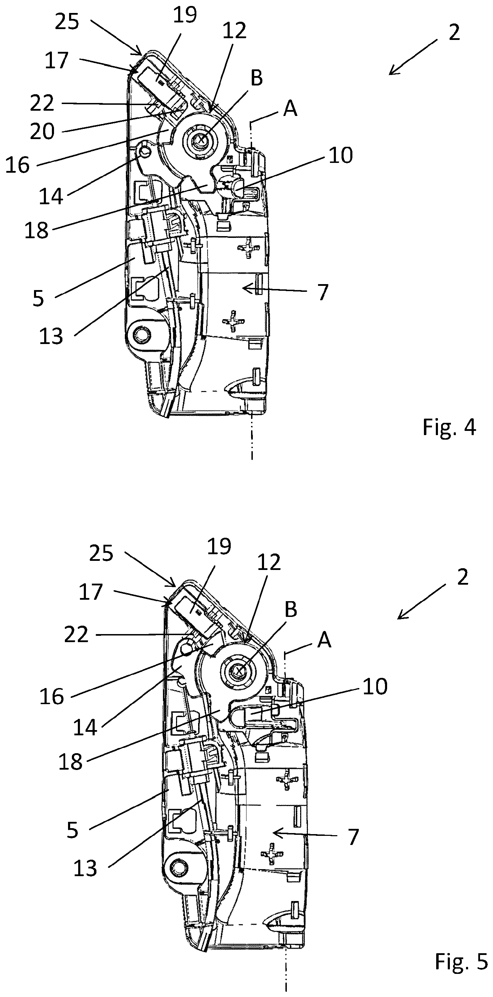

The handle lever 6, also called the flap, is pivotably received in the elongated bowl 7 and supported by the handle frame 5. The handle lever 6 is movable in rotation around a handle lever axis A with respect to the handle frame 5 between a rest position (figures 2 and 4) and an opening position (figure 5). The handle lever 6 is attached to the handle frame 5 using two pins 24 which allow the rotation of the handle lever 6.

The handle lever 6 has an elongated and flattened shape. It comprises a graspable element 9 protruding from one of its lateral edges. The graspable element 9 is intended to be handled by a user when manipulating the handle 2.

The rear door panel 3 on which the rear door handle 2 is attached comprises on its internal side a recess 23 adjacent to the rear door handle 2. This recess 23 defines an access to the graspable element 9 when the vehicle rear door 4 is closed.

The rest position of the handle lever 6 corresponds to the position of the handle lever 6 when it is not used by a user. The opening position of the handle lever 6 corresponds to the position of the handle lever 6 when a user grasps the graspable element 9 and rotates the handle lever 6 around the handle lever axis A in order to open the door 4.

The handle lever 6 rotation around the handle lever axis A between the rest position and the opening position is comprised between 30° and 50°, preferably the rotation of the handle lever 6 is of 40°.

When the handle lever 6 is mounted on the vehicle 1, the handle lever axis A is slightly inclined of about 5° to 20° with respect to a vertical axis, preferably of about 11° (figure 2). This inclination allows a better integration on the rear door panel 3 which has a V-shaped rear edge.

The handle lever 6 at one end comprises a control cam 10 intended to cooperate with the through-opening 8 and the kinematic system as described below. In the present embodiment, the control cam 10 has a general shape of a part of a torus, which may also be described as a curved finger. This shape allows for a good integration of the control cam 10 in the handle frame 5, more particularly, this shape allows for a better integration of the handle lever 6 through the through-opening 8.

The handle lever 6 is received in the elongated bowl 7 with one end received at the bottom end of the elongated bowl 7 and the other end received in the opposite end of the elongated bowl 7 with the control cam 10 disposed through the through-opening 8. A gasket 11 having a shape complementary to the shape of the edges of the through-opening 8 and of a part of the elongated bowl 7 is disposed between the control cam 10 and the through-opening 8.

### The kinematic system

The kinematic system allows a transmission of the rotational movement of the handle lever 6 to a latch mechanism (not represented) in order to unlatch the door when the handle lever 6 reaches its opening position. The kinematic system comprises a kinematic lever 12 and a Bowden cable 13.

The kinematic lever 12 is disposed on the rear face of the handle frame 5. The kinematic lever 12 is coupled to the handle lever 6 and rotatively mobile with respect to the handle frame 5 around a kinematic lever axis B between a rest position (figure 4) and an active position (figure 5), wherein the kinematic lever 12 has an attachment section 14 for the Bowden cable 13 and is configured to interact via the Bowden cable with the latch mechanism to unlatch the door when it reaches the active position.

The vehicle rear door handle 2 is configured so that when the handle lever 6 reaches the opening position, the kinematic lever 12 reaches its active position as described below.

Figures 4 and 5 only represent a part of the Bowden cable 13. The end of the Bowden cable 13 which is attached to the attachment section 14 of the kinematic lever 12 is not represented. The other end of the Bowden cable 13 is adapted to interact with the latch mechanism in order to latch and unlatch the door 4.

The kinematic lever axis A of the kinematic lever 12 is disposed between the free end 25 of the handle frame 5 and the elongated bowl 7. Further, the attachment section 14 for the Bowden cable is protruding such that the Bowden cable 13 can be fixed beside the elongated bowl 7. Thanks to this configuration which allows the kinematic lever 12 to be disposed axially above the handle lever 6 when the handle frame 5 is mounted on a vehicle door panel 3, the vehicle rear door handle 2 can be designed more compact because space utilization is optimized. In addition, owing to the fact that the attachment section 14 for the Bowden cable 13 of the kinematic lever 12 is protruding such that the Bowden cable 13 can be fixed beside, i.e., not behind but axially offset, the elongated bowl 7, the rear door handle 2 can further be designed more compact with, in particular, a reduced depth.

The attachment portion 14 protruding from the kinematic lever 12 comprises guiding means and an attaching hole for the Bowden cable 13. The end of the Bowden cable 13 is attached to the attaching hole of the attachment portion 14 in such a way that when the kinematic lever 12 rotates to the active position, the attachment portion 14 pulls on the end of the Bowden cable 13, the other end of which being attached to the latch mechanism, so that when the kinematic lever 12 reaches its active position the latch mechanism releases the door 4.

The kinematic lever 12 rotation around the kinematic lever axis B is of about 20° to 40°, preferably of 30°. This rotation of the kinematic lever 12 ensure a Bowden cable stroke of about 10 to 30 mm, which a stroke sufficient to trigger the latch mechanism.

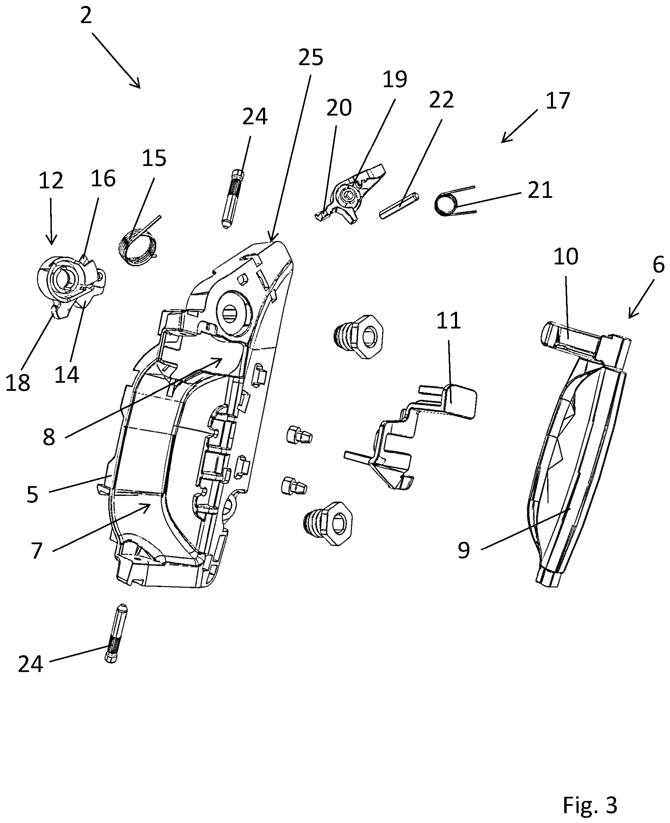

The return of the kinematic lever 12 to its rest position is ensured by a kinematic spring 15, here a torsion spring disposed in a housing of the kinematic lever 12 (figure 3).

The kinematic lever axis B is orthogonal to the handle lever axis A (figures 2, 4 and 5). This configuration is advantageous in that, in case of a collision, in particular of a lateral impact, the risk of an undesired opening of the rear door 4 is reduced because the acceleration undergoes during the collision will not move the kinematic lever 12 and the handle 6 with the same force and in the same way.

The kinematic lever 12 presents an abutment 16 formed by a sector shaped blocking tooth. The abutment 16 is intended to cooperate with the reversible inertial security system 17 in order to block rotation of the kinematic lever 12 in the rest position thus preventing an unlatch of the rear door 4. This abutment 16 has the shape of a protruding radial arm in the present embodiment.

The kinematic lever 12 comprises a radial arm 18 cooperating with the control cam 10 of the handle lever 6 so as to transmit the rotation movement of the handle lever 6 to the Bowden cable 13. The radial arm 18 is pushed by the control cam 10 during a rotation of the handle lever 6 from its rest to its opening position in such a way that when the handle lever 6 reaches its opening position the kinematic lever 12 reaches its active position and consequently pulls on the Bowden cable 13 and unlatch the rear door 4. As mentioned before, the control cam 10 has a general shape of a part of a torus, which shape allows for a smooth and fluid rotation of the kinematic lever 12 during the rotation of the handle lever 6 which ensures that there is no blockage felt by a user manipulating the handle lever 6.

The radial arm 18 of the kinematic lever 12 and the abutment 16 of the kinematic lever 12 are angularly offset of less than 150°, in particular less than 120°. This configuration allows for a more compact design of the vehicle rear door handle 2, in particular in the region of the free end 25 of the handle frame 5 which is tapered in the present case.

The procedure for opening a door according to the invention is described below.

At first, the rear door 4 is closed, and the rear door handle 2 is disposed as shown on figures 2 and 4, which means that the handle lever 6 and the kinematic lever 12 are both in their rest position.

In order to open the rear door 4 of the vehicle 1, a user introduces his hand through the recess 23 so as to access the graspable element 9 of the handle lever 6 and manipulates said graspable element 9 in order to rotates the handle lever 6 from its rest position to its opening position.

As mentioned above, during the rotation of the handle lever 6, the control cam 10 pushes the radial arm 18 of the kinematic lever 12 so that when the handle lever 6 reaches the opening position, the kinematic lever 12 reaches its active position (figure 5). During its rotation from its rest position to its active position, the kinematic lever 12 pulls on the Bowden cable 13 which interacts with a latch mechanism to unlatch the rear door 4.

Thus, the user can open the rear door 4 and access the interior of the vehicle 1.

When the user releases the graspable element 9 of the handle lever 6, the kinematic spring 15 ensures the return of the kinematic lever 12 to its rest position. During this return, the radial arm 18 of the kinematic lever 12 pushes the control cam 10 of the handle lever 6 in order to ensure the return of the handle lever 6 to its rest position.

### The reversible inertial security system

The reversible inertial security system 17 of the present embodiment is mounted on the rear face of the handle frame 5. It comprises a rocker arm 19, rotatively free with respect to an inertial system axis C and which carries an inertial mass at an end of said rocker arm 19.

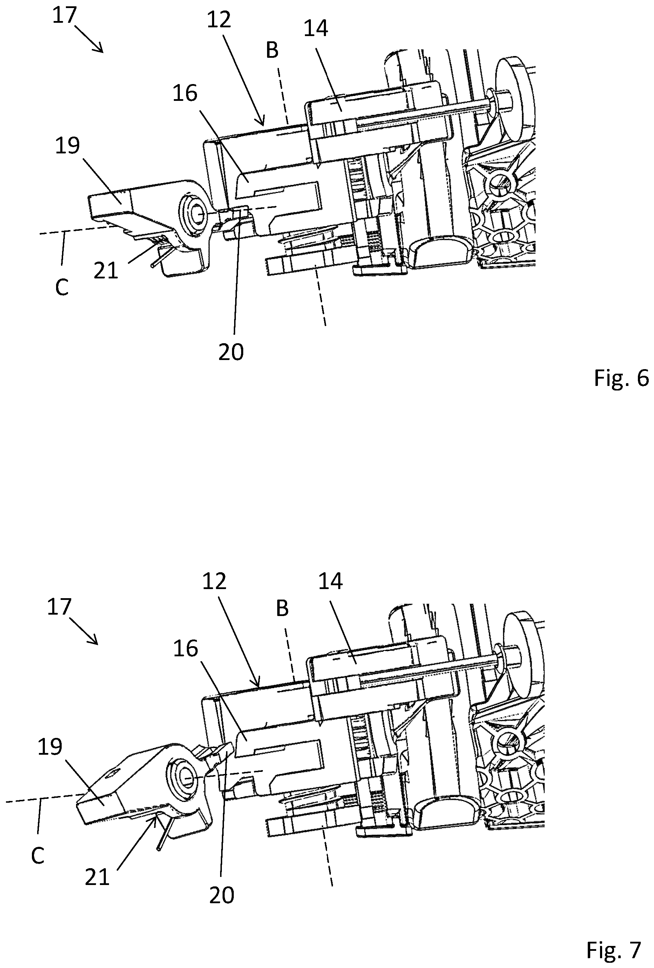

The rocker arm 19 is pivotally mounted between a rest position (figure 6) allowing the kinematic lever 12 to rotate between the rest position and the active position and a blocking position (figure 7) it reaches in case of a collision where the rocker arm 19 cooperates with the abutment 18 of the kinematic lever 12 in order to block rotation of the kinematic lever 12 in the rest position thus preventing an unlatch of the door 4. Figure 7 shows the rocker arm 19 in its blocking positions.

The rocker arm 19 comprises in particular an axial finger 20 forming the inertial mass at its radial end that intersects the path of the abutment 16 of the kinematic lever 12, when in blocking position. The rocker arm 19 extends radially with respect to the kinematic lever axis B (figures 2, 4 and 5)

The reversible inertial security system 17 comprises a safety spring 21 dimensioned to put the rocker arm 19 in the rest position in case of no collision and to be overdriven by the force exerted by the inertial mass 20 in case of a collision in order to put the rocker arm 19 in the blocking position. In the present embodiment, the safety spring 21 is a torsion spring. In other embodiments, other type of springs may be used. By tuning the safety spring 21 torque value, the inertial mass 20 and the length of the rocker arm 19, it is possible to select an acceleration value at and above which the rocker arm 19 reaches the blocking position.

The reversible inertial system 17 is in particular configured to block the opening of the door 4 when undergoing accelerations higher than 3 to 5*g*, where *g* is the standard gravity value (approximatively 9,81 m.s⁻²).

In the present embodiment, the reversible inertial security system 17 is preferably mounted between the free end 25 of the handle frame 5 and the kinematic lever 12. Thanks to this configuration which allows the reversible inertial security system 17 to be disposed axially above the handle lever 6 when the handle frame 5 is mounted on a vehicle door panel 3, the vehicle rear door handle 2 can be designed more compact because space utilization is optimized.

The presence of the inertial security system 17 is optional. Thus, a vehicle rear door handle 2 according to the invention may be provided without it. Further, the location of the inertial security system 17 described in the present embodiment is not limitative. The reversible inertial security system 17 may be disposed at any location which allows it to block an opening of the door in case of a collision. Further, the reversible inertial security system 17 does not necessarily cooperates with the kinematic lever 12 in order to block the opening of the door 4. For example, instead of cooperating with the abutment 16 of the kinematic lever 12, the rocker arm 19 may cooperates directly with the handle lever 6 in order to block a rotation of the handle lever 6 when the rocker arm 19 is in its blocking position.

Furthermore, it is provided that the reversible inertial security system 17 as described above may be used in a vehicle rear door handle 2 as described above by being mounted between the free end 25 of the handle frame 5 and the elongated bowl 7 regardless of the position of the kinematic lever 12. In that case, the reversible inertial security system 17 may block the rotation of the kinematic lever 12 in a way similar to what is described above or block directly the rotation of the handle lever 6. Thus, such a vehicle rear door handle may comprise:
- a handle frame 5 to be attached on an internal side of a vehicle rear door panel 3, the handle frame 5 having an elongated bowl 7,
- a handle lever 6 which is pivotably received in the elongated bowl 7 and supported by the handle frame 5, the handle lever 6 being movable in rotation around a handle lever axis A with respect to the handle lever frame 5 between a rest position and an opening position,
- a kinematic lever 12 coupled to the handle lever 6 and rotatively mobile with respect to the handle frame 5 around a kinematic lever axis B between a rest position and an active position, wherein the kinematic lever 12 has an attachment section for a Bowden cable 13 and is configured to interact via the Bowden cable 13 with a latch mechanism to unlatch the door 4 when it reaches the active position, the vehicle rear door handle 2 being configured so that when the handle lever 6 reaches the opening position, the kinematic lever 12 reaches its active position,

- at least one reversible inertial security system 17 mounted on the handle frame 5, said reversible inertial security system 17 comprising a rocker arm 19 which carries an inertial mass 20, the rocker arm 19 being pivotally mounted between:
   - a rest position allowing the kinematic lever 12 or the handle lever 6 to rotate between respectively its rest position and its active position or its rest position and its opening position, and
   - a blocking position it reaches in case of a collision where the rocker arm 19 cooperates with the kinematic lever 12 or the handle lever 6 in order to block rotation respectively of the kinematic lever 12 or the handle lever 6 in the rest position thus preventing an unlatch of the door 4,
wherein the rocker arm is disposed between a free end of the handle frame 5 and the elongated bowl 7.

In this alternative rear door handle 2, the reversible inertial security system 17 may comprise any of the features described for the reversible inertial security system 17 of the invention, taken alone or in combination.

### List of references

1: vehicle
2: rear door handle
3: rear door panel
4: rear door
5: handle frame
6: handle lever
7: elongated bowl
8: through-opening
9: graspable element
10: control cam
11: gasket
12: kinematic lever
13: Bowden cable
14: attachment section for the Bowden cable
15: kinematic spring
16: abutment
17: reversible inertial security system
18: radial arm of the kinematic lever
19: rocker arm
20: inertial mass
21: safety spring
22: central shaft
23: recess
24: pins
25: free end of the handle frame
A: handle lever axis
B: kinematic lever axis
C: inertial system axis

## Claims

1. Vehicle rear door handle (2), comprising:
- a handle frame (5) to be attached on an internal side of a vehicle rear door panel (3), the handle frame (5) having an elongated bowl (7),
- a handle lever (6) which is pivotably received in the elongated bowl (7) and supported by the handle frame (5), the handle lever (6) being movable in rotation around a handle lever axis (A) with respect to the handle frame (5) between a rest position and an opening position,
- a kinematic lever (12) coupled to the handle lever (6) and rotatively mobile with respect to the handle frame (5) around a kinematic lever axis (B) between a rest position and an active position, wherein the kinematic lever (12) has an attachment section (14) for a Bowden cable (13) and is configured to interact via the Bowden cable (13) with a latch mechanism to unlatch the door (4) when it reaches the active position, the vehicle rear door handle (2) being configured so that when the handle lever (6) reaches its opening position, the kinematic lever (12) reaches its active position,
wherein the kinematic lever axis (B) of the kinematic lever (12) is disposed between a free end (25) of the handle frame (5) and the elongated bowl (7) and the attachment section (14) for the Bowden cable (13) is protruding such that the Bowden cable (13) can be fixed beside the elongated bowl (7).

2. Vehicle rear door handle (2) according to claim 1, wherein the handle lever (6) at one end comprises a control cam (10) and the kinematic lever (12) comprises a radial arm (18) cooperating with the control cam (10) of the handle lever (6).

3. Vehicle rear door handle (6) according to any one of the preceding claims, wherein the kinematic lever (12) is disposed on a rear face of the handle frame (5) and the elongated bowl (7) presents at the end facing the kinematic lever (12) a through-opening (8) to cooperate with the control cam (10).

4. Vehicle rear door handle (2) according to any one of claims 2 or 3, wherein the control cam (10) has a general shape of a part of a torus.

5. Vehicle rear door handle (2) according to any one of the preceding claims, wherein the kinematic lever axis (B) is orthogonal to the handle lever axis (A).

6. Vehicle rear door handle (2) according to any one of the preceding claims, wherein the kinematic lever (12) presents an abutment (16) and the vehicle rear door handle (2) comprises at least one reversible inertial security system (17) mounted on the handle frame (5), said reversible inertial security system (17) comprising a rocker arm (19) which carries an inertial mass (20), the rocker arm (19) being pivotally mounted between a rest position allowing the kinematic lever (12) to rotate between the rest position and the active position and a blocking position it reaches in case of a collision where the rocker arm (19) cooperates with said abutment (16) in order to block rotation of the kinematic lever (12) in the rest position thus preventing an unlatch of the door (4).

7. Vehicle rear door handle (2) according to claim 6, wherein the reversible inertial security system (17) comprises a safety spring (21) dimensioned to put the rocker arm (19) in the rest position in case of no collision and to be overdriven by the force exerted by the inertial mass (20) in case of a collision in order to put the rocker arm (19) in the blocking position.

8. Vehicle rear door handle (2) according to any one of claims 6 or 7, wherein the reversible inertial security system (17) is mounted between the free end (25) of the handle frame (5) and the kinematic lever (12).

9. Vehicle rear door handle (2) according to any one of claims 6 to 8, wherein the radial arm (18) of the kinematic lever (12) and the abutment (16) of the kinematic lever (12) are angularly offset of less than 150°, in particular less than 120°.

10. Vehicle rear door handle (2) according to any one of claims 6 to 9, wherein the abutment (16) is formed by a sector shaped blocking tooth.

11. Vehicle rear door handle according to any one of claims 6 to 10, wherein the rocker arm (19) extends radially with respect to the kinematic lever axis (B).

12. Vehicle rear door (4) **characterized in that** it comprises a vehicle rear door handle (2) according to any one of the preceding claims.

13. Vehicle rear door (4) according to claim 12, comprising a vehicle rear door panel (3) having a V-shaped rear edge, the vehicle rear door handle (2) being attached to an internal side of the vehicle rear door panel (3) at the rear edge of the vehicle rear door panel (3).

14. Vehicle rear door (4) according to claim 13, wherein the vehicle rear door panel (3) comprises on its internal side a recess (23) adjacent to the vehicle rear door handle (2), the recess (23) defining an access to the handle lever (6) of the vehicle rear door handle (2) when the vehicle rear door (4) is closed.

15. Vehicle (1) **characterized in that** it comprises a vehicle rear door handle (2) according to any one of claims 1 to 11.

## Patentansprüche

1. Fahrzeughintertürgriff (2), umfassend:
- einen Griffrahmen (5), der an einer Innenseite eines Fahrzeughintertürblatts (3) anzubringen ist, wobei der Griffrahmen (5) eine längliche Schale (7) aufweist,
- einen Griffhebel (6), der schwenkbar in der länglichen Schale (7) aufgenommen und von dem Griffrahmen (5) getragen ist, wobei der Griffhebel (6) um eine Griffhebelachse (A) in Bezug auf den Griffrahmen (5) zwischen einer Ruhestellung und einer Öffnungsstellung in einer Drehung beweglich ist,
- einen kinematischen Hebel (12), der mit dem Griffhebel (6) gekoppelt ist und in Bezug auf den Griffrahmen (5) um eine kinematische Hebelachse (B) zwischen einer Ruhestellung und einer aktiven Stellung drehbeweglich ist, wobei der kinematische Hebel (12) einen Anbringungsabschnitt (14) für ein Bowdenzugkabel (13) aufweist und eingerichtet ist, um über das Bowdenzugkabel (13) mit einem Verriegelungsmechanismus zusammenzuwirken, um die Tür (4) zu entriegeln, wenn er die aktive Stellung erreicht, wobei der Fahrzeughintertürgriff (2) so eingerichtet ist, dass, wenn der Griffhebel (6) seine Öffnungsstellung erreicht, der kinematische Hebel (12) seine aktive Stellung erreicht,
wobei die kinematische Hebelachse (B) des kinematischen Hebels (12) zwischen einem freien Ende (25) des Griffrahmens (5) und der länglichen Schale (7) angeordnet ist und der Anbringungsabschnitt (14) für das Bowdenzugkabel (13) derart hervorsteht, dass das Bowdenzugkabel (13) neben der länglichen Schale (7) befestigt sein kann.

2. Fahrzeughintertürgriff (2) nach Anspruch 1, wobei der Griffhebel (6) an einem Ende einen Steuernocken (10) umfasst und der kinematische Hebel (12) einen Radialarm (18) umfasst, der mit dem Steuernocken (10) des Griffhebels (6) zusammenwirkt.

3. Fahrzeughintertürgriff (6) nach einem der vorhergehenden Ansprüche, wobei der kinematische Hebel (12) auf einer Rückfläche des Griffrahmens (5) angeordnet ist und die längliche Schale (7) an dem Ende, das dem kinematischen Hebel (12) zugewandt ist, eine Durchgangsöffnung (8) aufweist, um mit dem Steuernocken (10) zusammenzuwirken.

4. Fahrzeughintertürgriff (2) nach einem der Ansprüche 2 oder 3, wobei der Steuernocken (10) eine allgemeine Form eines Teils eines Torus aufweist.

5. Fahrzeughintertürgriff (2) nach einem der vorhergehenden Ansprüche, wobei die kinematische Hebelachse (B) orthogonal zu der Griffhebelachse (A) ist.

6. Fahrzeughintertürgriff (2) nach einem der vorhergehenden Ansprüche, wobei der kinematische Hebel (12) einen Anschlag (16) aufweist und der Fahrzeughintertürgriff (2) mindestens ein reversibles Trägheitssicherheitssystem (17) umfasst, das auf dem Griffrahmen (5) montiert ist, wobei das reversible Trägheitssicherheitssystem (17) einen Kipphebel (19) umfasst, der eine Trägheitsmasse (20) trägt, wobei der Kipphebel (19) schwenkbar montiert ist zwischen einer Ruhestellung, die es dem kinematischen Hebel (12) ermöglicht, sich zwischen der Ruhestellung und der aktiven Stellung zu drehen, und einer Sperrstellung, die er im Falle einer Kollision erreicht, wobei der Kipphebel (19) mit dem Anschlag (16) zusammenwirkt, um eine Drehung des kinematischen Hebels (12) in der Ruhestellung zu sperren, wodurch ein Entriegeln der Tür (4) verhindert wird.

7. Fahrzeughintertürgriff (2) nach Anspruch 6, wobei das reversible Trägheitssicherheitssystem (17) eine Sicherheitsfeder (21) umfasst, die dimensioniert ist, um den Kipphebel (19) im Falle einer Nichtkollision in die Ruhestellung zu bringen und im Falle einer Kollision durch die Kraft, die von der Trägheitsmasse (20) ausgeübt wird, überlastet zu werden, um den Kipphebel (19) in die Sperrposition zu bringen.

8. Fahrzeughintertürgriff (2) nach einem der Ansprüche 6 oder 7, wobei das reversible Trägheitssicherheitssystem (17) zwischen dem freien Ende (25) des Griffrahmens (5) und dem kinematischen Hebel (12) montiert ist.

9. Fahrzeughintertürgriff (2) nach einem der Ansprüche 6 bis 8, wobei der Radialarm (18) des kinematischen Hebels (12) und der Anschlag (16) des kinematischen Hebels (12) um weniger als 150°, insbesondere weniger als 120°, winklig versetzt sind.

10. Fahrzeughintertürgriff (2) nach einem der Ansprüche 6 bis 9, wobei der Anschlag (16) von einem sektorförmigen Sperrzahn gebildet ist.

11. Fahrzeughintertürgriff nach einem der Ansprüche 6 bis 10, wobei sich der Kipphebel (19) radial in Bezug auf die kinematische Hebelachse (B) erstreckt.

12. Fahrzeughintertür (4), **dadurch gekennzeichnet, dass** sie einen Fahrzeughintertürgriff (2) nach einem der vorhergehenden Ansprüche umfasst.

13. Fahrzeughintertür (4) nach Anspruch 12, umfassend ein Fahrzeughintertürblatt (3) mit einer V-förmigen Hinterkante, wobei der Fahrzeughintertürgriff (2) an einer Innenseite des Fahrzeughintertürblatts (3) an der Hinterkante des Fahrzeughintertürblatts (3) angebracht ist.

14. Fahrzeughintertür (4) nach Anspruch 13, wobei das hintere Fahrzeughintertürblatt (3) auf seiner Innenseite eine Aussparung (23) umfasst, die dem Fahrzeughintertürgriff (2) benachbart ist, wobei die Aussparung (23) einen Zugang zu dem Griffhebel (6) des Fahrzeughintertürgriffs (2) definiert, wenn die Fahrzeughintertür (4) geschlossen ist.

15. Fahrzeug (1), **dadurch gekennzeichnet, dass** es einen Fahrzeughintertürgriff (2) nach einem der Ansprüche 1 bis 11 umfasst.

## Revendications

1. Poignée de portière arrière de véhicule (2), comprenant :
- un cadre de poignée (5) destiné à être fixé sur un côté interne d'un panneau de portière arrière de véhicule (3), le cadre de poignée (5) ayant une cuvette allongée (7),
- un levier de poignée (6) qui est reçu de façon pivotante dans la cuvette allongée (7) et supporté par le cadre de poignée (5), le levier de poignée (6) étant mobile en rotation autour d'un axe de levier de poignée (A) par rapport au cadre de poignée (5) entre une position de repos et une position d'ouverture,
- un levier cinématique (12) couplé au levier de poignée (6) et mobile de façon rotative par rapport au cadre de poignée (5) autour d'un axe de levier cinématique (B) entre une position de repos et une position active, dans laquelle le levier cinématique (12) a une section de fixation (14) pour un câble Bowden (13) et est configuré pour interagir par l'intermédiaire du câble Bowden (13) avec un mécanisme de verrouillage pour déverrouiller la portière (4) lorsqu'il atteint la position active, la poignée de portière arrière de véhicule (2) étant configurée de telle sorte que, lorsque le levier de poignée (6) atteint sa position d'ouverture, le levier cinématique (12) atteint sa position active,
dans laquelle l'axe de levier cinématique (B) du levier cinématique (12) est disposé entre une extrémité libre (25) du cadre de poignée (5) et la cuvette allongée (7) et la section de fixation (14) pour le câble Bowden (13) est en saillie de manière telle que le câble Bowden (13) peut être assujetti à côté de la cuvette allongée (7).

2. Poignée de portière arrière de véhicule (2) selon la revendication 1, dans laquelle le levier de poignée (6), à une extrémité, comprend une came de commande (10) et le levier cinématique (12) comprend un bras radial (18) coopérant avec la came de commande (10) du levier de poignée (6).

3. Poignée de portière arrière de véhicule (6) selon l'une quelconque des revendications précédentes, dans laquelle le levier cinématique (12) est disposé sur une face arrière du cadre de poignée (5) et la cuvette allongée (7) présente, à l'extrémité faisant face au levier cinématique (12), une ouverture de passage (8) pour coopérer avec la came de commande (10).

4. Poignée de portière arrière de véhicule (2) selon l'une quelconque des revendications 2 ou 3, dans laquelle la came de commande (10) a une forme générale d'une partie d'un tore.

5. Poignée de portière arrière de véhicule (2) selon l'une quelconque des revendications précédentes, dans laquelle l'axe de levier cinématique (B) est orthogonal à l'axe de levier de poignée (A).

6. Poignée de portière arrière de véhicule (2) selon l'une quelconque des revendications précédentes, dans laquelle le levier cinématique (12) présente une butée (16) et la poignée de portière arrière de véhicule (2) comprend au moins un système de sécurité inertiel réversible (17) monté sur le cadre de poignée (5), ledit système de sécurité inertiel réversible (17) comprenant un bras balancier (19) qui porte une masse inertielle (20), le bras balancier (19) étant monté de façon pivotante entre une position de repos permettant au levier cinématique (12) d'entrer en rotation entre la position de repos et la position active et une position de blocage qu'il atteint en cas d'une collision où le bras balancier (19) coopère avec ladite butée (16) afin de bloquer la rotation du levier cinématique (12) dans la position de repos, ainsi empêchant un déverrouillage de la portière (4).

7. Poignée de portière arrière de véhicule (2) selon la revendication 6, dans laquelle le système de sécurité inertiel réversible (17) comprend un ressort de sécurité (21) dimensionné pour mettre le bras balancier (19) dans la position de repos en cas de non-collision et pour être surpassé par la force exercée par la masse inertielle (20) en cas de collision, afin de mettre le bras balancier (19) dans la position de blocage.

8. Poignée de portière arrière de véhicule (2) selon l'une quelconque des revendications 6 ou 7, dans laquelle le système de sécurité inertiel réversible (17) est monté entre l'extrémité libre (25) du cadre de poignée (5) et le levier cinématique (12).

9. Poignée de portière arrière de véhicule (2) selon l'une quelconque des revendications 6 à 8, dans laquelle le bras radial (18) du levier cinématique (12) et la butée (16) du levier cinématique (12) sont décalés angulairement de moins de 150°, en particulier de moins de 120°.

10. Poignée de portière arrière de véhicule (2) selon l'une quelconque des revendications 6 à 9, dans laquelle la butée (16) est formée par une dent de blocage en forme de secteur.

11. Poignée de portière arrière de véhicule selon l'une quelconque des revendications 6 à 10, dans laquelle le bras balancier (19) s'étend radialement par rapport à l'axe de levier cinématique (B).

12. Portière arrière de véhicule (4), **caractérisée en ce qu'**elle comprend une poignée de portière arrière de véhicule (2) selon l'une quelconque des revendications précédentes.

13. Portière arrière de véhicule (4) selon la revendication 12, comprenant un panneau de portière arrière de véhicule (3) ayant un bord arrière en forme de V, la poignée de portière arrière de véhicule (2) étant fixée à un côté interne du panneau de portière arrière de véhicule (3), au bord arrière du panneau de portière arrière de véhicule (3).

14. Portière arrière de véhicule (4) selon la revendication 13, dans laquelle le panneau de portière arrière de véhicule (3) comprend, sur son côté interne, un évidement (23) adjacent à la poignée de portière arrière de véhicule (2), l'évidement (23) définissant un accès au levier de poignée (6) de la poignée de portière arrière de véhicule (2) lorsque la portière arrière de véhicule (4) est fermée.

15. Véhicule (1), **caractérisé en ce qu'**il comprend une poignée de portière arrière de véhicule (2) selon l'une quelconque des revendications 1 à 11.
